# EUROPEAN PATENT SPECIFICATION

(11) **EP 0 554 085 B1**
(45) Date of publication and mention of the grant of the patent: **26.03.1997**
(21) Application number: 93300613.2
(22) Date of filing: 28.01.1993
(51) Int. Cl.: G01H 9/00

(54) **Hydrophone**
Hydrophon
Hydrophone

(30) Priority: 28.01.1992 US 826897
(43) Date of publication of application: 04.08.1993
(73) Proprietor: LITTON SYSTEMS, INC., Beverly Hills, California 90210-4867 (US)
(72) Inventor: Danver, Bruce A., Tarzana, California 91356 (US); Meyer, A. Douglas, West Hills, California 91304 (US)
(74) Representative: Godsill, John Kenneth

(56) References cited:
- EP-A- 0 489 514
- CA-A- 1 124 384
- US-A- 4 311 391
- US-A- 4 799 202
- JOURNAL OF LIGHTWAVE TECHNOLOGY vol. LT-5, no. 5, May 1987, NEW YORK US pages 647 - 652 G. M. MCDEARMON 'Theoretical analysis of push-pull fibre-optic hydrophone.'

## Description

The hydrophone is an instrument for measuring acoustic signals in a fluid body, acting as a transducor for converting acoustic wave pressure into a measurable signal. Such signal can then be processed to identify and locate an object within the fluid body. The frequency of the signal, corresponding to the acoustic wave frequency, may identify, for example, a submarine propeller within the detection range.

Hydrophones of the type that generate an electrical signal in response to detected acoustic signals employ an electrically-active element such as a piezoceramic or poly-vinyl-difluride (PVF₂, an electrically active polymer) to convert the acoustic input to the signal. These devices convert the incident acoustic pressure into a voltage that varies with the magnitude and the frequency of the incident acoustic wave fronts.

The generally high electrical impedance of hydrophones of the electrical type requires preamplifiers located near the transducer (the sensing element) for transmitting the electrical signal to the ship via the data bus, necessitating the supply of electrical power to the preamplifier/transducer assembly. In addition to adding complexity, weight and cost to the outboard system, electrical hydrophone systems are subject to failure when the wet-end subassembly is breached and exposed to a seawater environment. The multiple sensors required for detection and localization of quieter acoustic signals further complicate matters by requiring a larger data bus transmission bandwidth and associated bit error requirement. This results in an increase in the weight of the ship due to the additional sensors, associated preamplifiers and cabling required. Finally, such systems are prone to extraneous electromagnetic pickup and interference.

Fiber optic hydrophone technology offers a number of advantages. Fiber optic systems are electrically passive and do not risk exposure of electronics to an undersea environment. Since the sensor is an optical device, an all-optical telemetry (data bus) system is easily implemented. By employing a completely optical detection and telemetry system, extraneous electromagnetic pickup is eliminated. An increase in telemetry bandwidth (high detection bandwidth and/or increased sensor count per line) follows from the use of optical frequency energy. Additionally, a reduction in weight is realized by the elimination of any need for preamplifiers and associated power supplies.

A common fiber optic hydrophone comprises a flat spiral of optical fiber potted in a planar polyurethane base. This omnidirectional sensor is subject to a significant amount of sensitivity to transverse acceleration forces as a consequence of the susceptibility of the relatively-flimsy planar device to stressing. The acceleration force effectively contaminates the optical signal detected by the fiber spiral. Since it does not possess acceleration cancelling properties, accelerometers must be mounted to the ship's hull to measure the forces that are then modeled (insofar as possible) out of the data.

The utility of the prior art fiber optic hydrophone of the above-identified type is greatly compromised by the additional hardware and signal processing required to null the significant effects of transverse acceleration. Furthermore, exact nulling of acceleration effects is essentially impossible as the hull-mounted accelerometers are unavoidably located at some distance from the hydrophone itself.

A push-pull fiber-optic hydrophone is disclosed in JOURNAL of LIGHT WAVE TECHNOLOGY, vol. LT-5, No. 5, May 1987, pages 647 to 652, the hydrophone having two end plates between which are sensor support means in the form of co-axial annular tubes with a first optical fibre coil round about the outside of the inner tube and a second optical fiber coil on the inside surface of the outer tube.

According to the present invention there is provided a hydrophone comprising sensor supporting means and, mounted on the supporting means, first and second co-axially arranged optical fiber coils, the supporting means being fixed between two substantially parallel members and comprising inner and outer rings arranged concentrically about an axis substantially at right angles to the two members, each ring comprising an inner and an outer wall defining in combination with the two members an annular space with the inner and outer walls of each ring sealably fixed between the two substantially parallel members to seal said annular spaces, one of the optical fiber coils being arranged on the outer circumference of the inner wall of one of the rings and the other on the outer circumference of the outer wall of the other of the rings, and there being means for providing communication to the annular region formed between said rings and to the region within the inner ring.

An embodiment of the invention may provide an omnidirectional hydrophone which, in particular, is insensitive to transverse acceleration forces.

For a better understanding of the invention and to show how the same may be carried into effect, reference will now be made, by way of example, to the accompanying drawings, wherein:
Figure 1 is a top plan view of a hydrophone according to an embodiment of the invention including a plurality of mandrels;
Figure 2 is a cross-sectional view in elevation of a mandrel taken at line 2-2 of Figure 2;
Figure 3 is an enlarged cross-sectional view of a mandrel including inner ring and outer ring optical fiber windings;
Figure 4 is a schematic and top plan view of the invention with planar upper sealing members removed for purposes of clarity;
Figure 5 is a cross-sectional view of a mandrel in accordance with the invention encapsulated in an elastomeric potting material;
Figure 6 is a cross-sectional view of a mandrel according to a second embodiment of the invention; and
Figure 7 is a cross-sectional view of a mandrel according to a third embodiment of the invention.

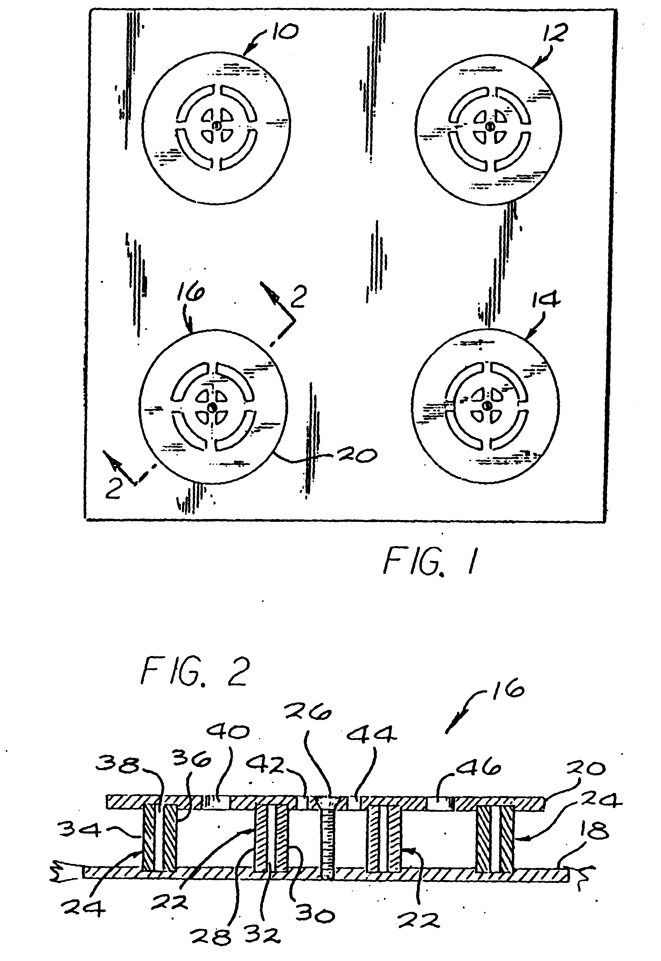

Turning to the drawings, Figure 1 is a top plan view of a hydrophone in accordance with the invention incorporating mandrels 10, 12, 14 and 16. The mandrels are positioned upon a common planar base member 18 that may comprise, for example, an aluminum alloy. The base member 18 might be directly fixed to the hull of a ship in use, permitting free-flooded operation. As mentioned earlier, the hydrophone, being a fiber optic and not an electrical device, is not subject to catastrophic failure when breached. Alternatively, as shown in a succeeding figure, the device may be encapsulated in potting material in operation.

The optical fiber wiring of the hydrophone is not shown in Figure 1. Rather, the fiber has been removed for clarity. Further, while the device is illustrated in conjunction with multiple mandrels, the benefits of the invention may be realized in a single mandrel device.

Figure 2 is a cross-sectional elevation view of a mandrel in accordance with the invention taken at line 2-2 of Figure 1. As shown, an upper planar sealing member 20, shown in Figure 1 to include a pair of concentric planar rings, sits atop and caps upstanding inner and outer rings 22 and 24 respectively. The rings 22 and 24 are arranged concentrically about a central fastener or screw 26 that secures the sealing cap 20 in spaced relation to the base plate 18 with the inner and outer rings 22 and 24 acting as spacers.

As can be seen, each of the upstanding rings 22 and 24 comprises an assembly of inner and outer annular members separated by a void or air space. That is, the inner ring 22 comprises an outer annular member 28 and an inner annular member 30 separated by a void 32. Similarly, the outer ring 24 comprises an outer annular member 34 and an inner annular member 36 separated by an air space 38.

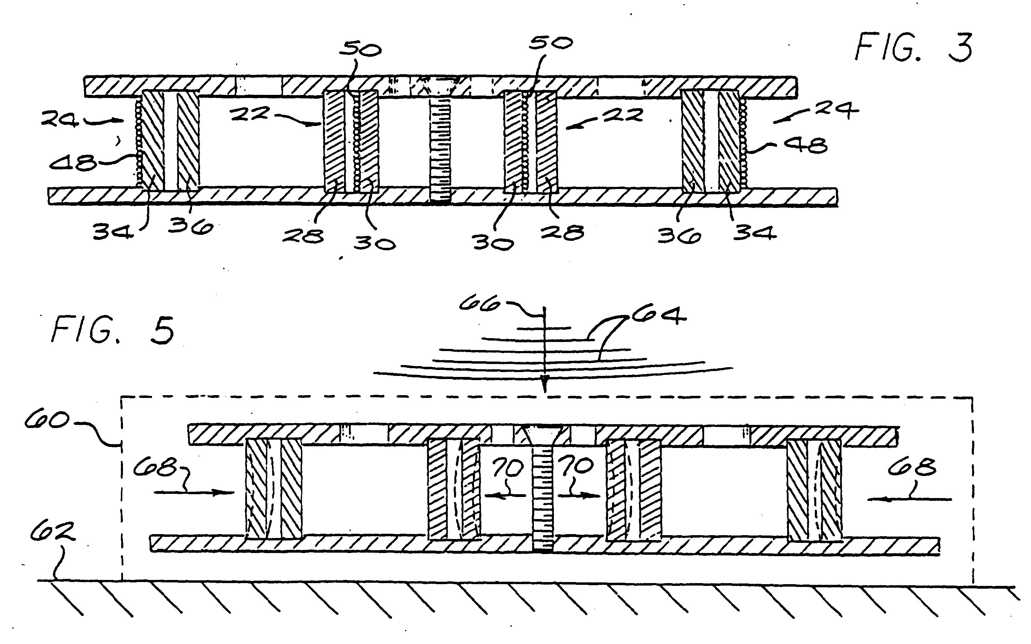

Grooves (not shown) are provided in the upper planar member 20 and in the planar base member 18 for accepting the inner and outer rings 22 and 24 respectively. Additionally, the rings are fixed within the grooves by means of an appropriate adhesive to maintain the integrity of spaces 32 and 38, which may be void or contain air or other compressible material. Apertures 40, 42, 44 and 46 in the upper planar member 20 and apertures (not shown) in the base plate 18 are provided for permitting communication between the hydrophone and the environment (regardless of whether the hydrophone is full-flooded or encapsulated) to establish sensitivity to the surrounding environment. However, apertures 40, 46 need not be provided for the winding configuration of Figure 3.

Figure 3 is an enlarged cross-sectional view in elevation of a mandrel as in the preceding figure with fiber optic windings in place. As can be seen, a first winding 48 (comprising one or more layers of fiber) encircles the circumference of the outer annular member 34 of the outer ring 24 while a second fiber winding 50 (again comprising one or more layers of optical fiber) encircles the circumference of the inner annular member 30 of the inner ring 22. As will become apparent, the arrangement of windings, in conjunction with the structure of the mandrel, results in a push-pull relationship whereby an active reference signal is provided. This effectively doubles the sensitivity to acoustic forces.

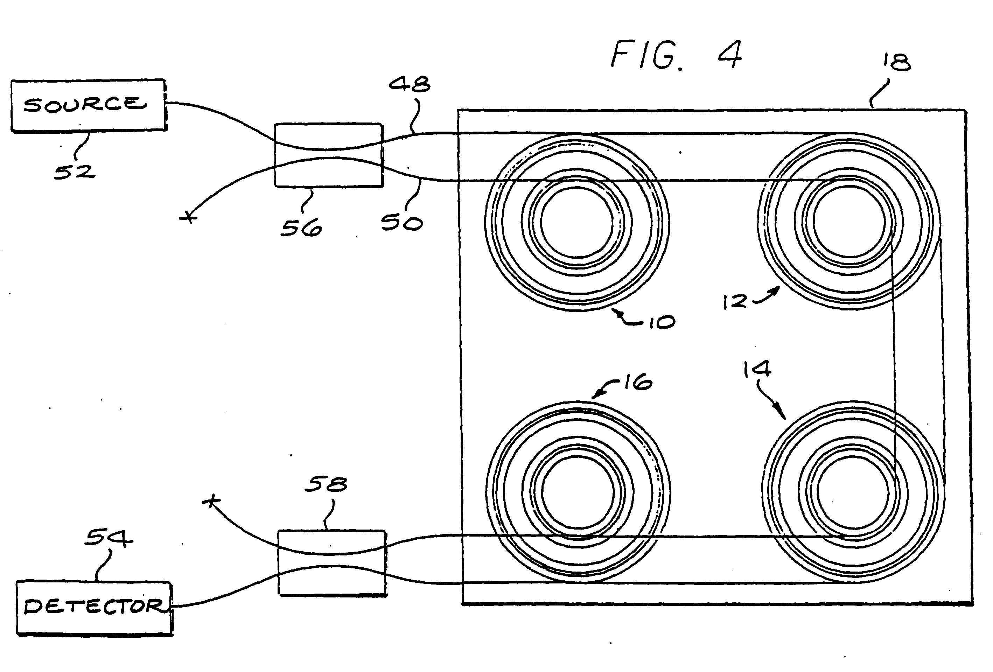

Figure 4 is a winding diagram corresponding to the mandrel winding pattern of Figure 3 for an optomechanical hydrophone of an embodiment that utilizes a plurality of mandrels mounted on a common base plate 18. As illustrated in this figure, the upper planar members of the mandrels 10, 12, 14 and 16 have been removed, revealing the concentric inner and outer rings (and, for that matter, the concentric inner and outer annular members that comprise each of those rings) discussed above. Each of the first and second windings 48 and 50 respectively comprises a single continuous optical fiber. The first winding fiber 48 proceeds consecutively from the circumference of the outer annular member of the outer ring of the mandrel 10 to that of the mandrel 12 and so forth. The second optical fiber 50 is similarly wound consecutively about the circumferences of the inner annular members of the inner rings of the mandrels 10, 12 and 14 and 16. While the version illustrated includes four mandrels, this arrangement is not intended to imply that four mandrels or that a symmetrical arrangement is required or always desirable. Rather, other applications may call for other numbers of mandrels (or, for that matter, a single mandrel) arranged in varying configurations about a base plate. Further, the particular sequence and pattern for winding the optical fibers 48 and 50 may vary from that as illustrated in accordance with the designated application.

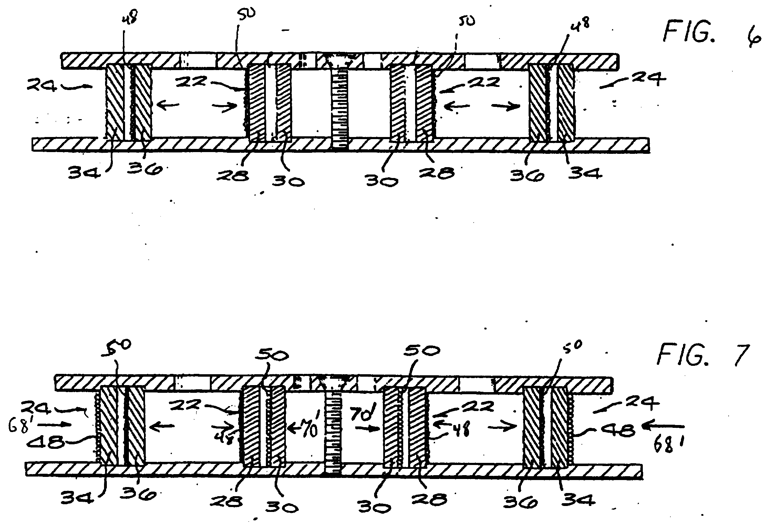

For example, alternative mandrel winding patterns are indicated in Figures 6 and 7. In the mandrel winding pattern of Figure 6, the fiber 48 is wound about the inner annular member 36 of the outer ring 24 while the fiber 50 is wound about the outer annular member 28 of the inner ring 22. Again, a push-pull relationship is obtained in which the sensitivity to acoustic forces is doubled. The apertures 42, 44 could be omitted in this case.

In Figure 7 the fiber 48 is wound about the outer annular member 34 of the outer ring 24 and the outer annular member 28 of the inner ring 22 while the fiber 50 is wound about the inner annular member 36 of the outer ring 24 and the inner annular member 30 of the inner ring 22. While such a winding pattern requires twice the fiber of the winding patterns of either Figure 3 or Figure 6, it generates an output signal whose sensitivity to acoustic forces is double that of either of such embodiments.

The optical circuit of the acoustic wave detection system includes a source of optical energy 52, a photodetector 54 and couplers 56 and 58, the first coupler acting to launch in-phase optical signals along the fibers 48 and 50 and the second serving to combine the differentially phase-shifted output signals prior to application to the photodetector 54. The measured phase shift or retardation between the signals after transmission from the source 52 provides an indication of the acoustic wave pressures exerted upon the inner and outer rings of the mandrel(s) of the hydrophone.

Figure 5 is a cross-sectional elevation view of a mandrel in operation. For purposes of clarity, the fiber optic windings have been removed and only the deflections of the portions of the inner and outer rings 22 and 24 respectively that contribute to the output signal detected by a hydrophone wound in accordance with the fiber winding pattern of Figures 3 and 4 are shown in shadow outline. Further, the mandrel as illustrated in Figure 5 is encapsulated in a block 60 (shown in shadow view) of an appropriate elastomeric material such as polyurethane. An encapsulation is often appropriate and preferable to free-flooded operation in view of the corrosive ocean environment.

As shown, the polyurethane block encapsulation is mounted to the hull 62 of a ship. An acoustic wavefront 64 propagating in the direction 66 impinges the polyurethane block 60 as shown. As a first aside, the inner and outer rings 22 and 24, whose deflections generate the output signals, for measurement in accordance with the mandrel fiber winding pattern of Figures 3 and 4, are arranged parallel to the transversely-directed force thus stiffening the mandrel against the significant signal contamination resulting from transverse acceleration forces in prior art devices.

The force exerted by the wave front 64 is transformed, in accordance with the modulus of the material of the block 60, into equal and opposite laterally acting forces 68, 68' and 70, 70' as shown. The relationship between the transversely-acting wavefront 64 and the lateral forces is determined by the Poisson's ratio of the potting material.

As shown in shadow view in Figure 5, the circumference of the outer annular member of the outer ring 24 and that of the inner annular member of the inner ring 22 are bowed in opposite directions in response to the forces 68 and 70. This occurs as a consequence of the immersion of the mandrel in an encapsulating potting material or directly into the fluid body. The only portion of the device shown in Figure 5 that is not filled with potting material (or, in the case of a flooded hydrophone, with fluid) are the air gaps or voids 32 and 38. The outwardly acting force 70 at the center of the mandrel compresses the inner annular member of the inner ring while the inwardly-acting force 68 acts upon the outer annular member of the outer ring to bow that member inwardly.

For purposes of clarity, the outward bowing of the inner annular member 36 of the outer ring and the inward bowing of the outer annular member 18 of the inner ring 22 are not shown as such motions do not contribute to the signal generated in accordance with the mandrel winding pattern of Figures 3 and 4. Such deflections provide the entire output signal for a hydrophone with mandrel winding pattern in accordance with Figure 6 while all of the deflections contribute to the push-pull output obtained by means of a hydrophone in accordance with the invention with mandrels wound according to Figure 7.

The net result of the forces illustrated in Figure 5 is to produce equal and opposite stressings of the fibers 48 and 50. Such stressings result in equal and opposite effects upon the optical birefringences of the two fibers. Referring back to Figure 4, the optical signal detected at the photodetector 54 will thus exhibit a phase shift or retardation that is double the amount which would be detected with a passive reference (i.e. no push-pull relationship between the rings 22 and 24.)

Thus, as can be seen, the present invention provides an improved fiber optic hydrophone. By employing mandrels of ring-like but non-planar design, the device is substantially stiffened against transverse acceleration forces that could otherwise contaminate the hydrophone output signal. Furthermore, by providing a push-pull arrangement, the sensitivity of the hydrophone further enhanced.

## Claims

1. A hydrophone comprising sensor supporting means (22, 24) and, mounted on the supporting means (22, 24), first and second co-axially arranged optical fiber coils (48, 50), the supporting means (22, 24) being fixed between two substantially parallel members (18, 20) and comprising inner (22) and outer (24) rings arranged concentrically about an axis substantially at right angles to the two members, each ring comprising an inner (30, 36) and an outer (28, 34) wall defining in combination with the two members an annular space (32, 38) with the inner (30, 36) and outer (28, 34) walls of each ring sealably fixed between the two substantially parallel members (18, 20) to seal said annular spaces (32, 38), one of the optical fiber coils (48) being arranged on the outer circumference of the inner wall (30) of one of the rings and the other on the outer circumference of the outer wall (34) of the other of the rings, and there being means (40, 42, 44, 46) for providing communication to the annular region formed between said rings (22, 24) and to the region within the inner ring (22).

2. A hydrophone according to claim 1, in combination with a light source (52) and a photodetector (54) in optical communication with opposite ends of the fiber coils (48, 50).

3. A hydrophone according to claim 1 or 2 wherein there are a plurality of supporting means, with those fiber coils thereof which are arranged to be subjected to radially inwardly directed forces connected in one series and those fiber coils thereof which are arranged to be subjected to radially outwardly directed forces connected in another series.

4. A hydrophone according to any one of the preceding claims, comprising at least one fastener (26) for securing one of the members (20) in spaced relationship to the other member (18).

5. A hydrophone according to any one of the preceding claims wherein one of the members (20) is of circular shape.

6. A hydrophone according to any one of the preceding claims wherein both members (18, 20) are substantially planar.

7. A hydrophone according to any one of the preceding claims wherein the means providing communication comprises aperture means in at least one of the members (18, 20).

8. A hydrophone according to any one of the preceding claims wherein said rings (22,24) and said members (18, 20) are of aluminum alloy.

9. A hydrophone according to any one of the preceding claims, wherein an intermediate portion of the optical fiber of one of the optical fiber coils is carried by the outer wall (34) of the outer ring (24) and an intermediate portion of the optical fiber of the other fiber coil is carried by the inner wall (30) of said inner ring (22) .

10. A hydrophone according to any one of the preceding claims 1 to 8, wherein an intermediate portion of the optical fiber of one of the optical fiber coil is carried by the inner wall (36) of the outer ring (24) and an intermediate portion of the optical fiber of the other optical fiber coil is carried by the outer wall (28) of the inner ring (22).

11. A hydrophone according to any one of the preceding claims 1 to 8, wherein intermediate portions of the optical fiber of one of the optical fiber coils (48) are carried by the outer wall (34) of the outer ring (24) and the outer wall (28) of the inner ring (22) and intermediate portions of the optical fiber of the other optical fiber coil (50) are carried by the inner wall (36) of the outer ring (24) and the inner wall (30) of the inner ring (22).

12. A hydrophone according to any one of the preceding claims wherein said hydrophone is potted with an elastomeric material.

13. A hydrophone according to claim 12 wherein said elastomeric material is polyurethane.

14. A hydrophone according to any one of claims 1 to 11 wherein the hydrophone is constructed so that it can be used in a state in which it is free-flooded in a fluid.

15. A hydrophone according to claim 14 wherein said fluid is water.

16. A hydrophone according to any one of the preceding claims arranged to operate omnidirectionally.

## Patentansprüche

1. Hydrophon, umfassend Sensorträgervorrichtungen (22, 24) und erste und zweite koaxial angeordnete Lichtleiterspulen (48, 50), die auf den Trägervorrichtungen (22, 24) montiert sind, wobei die Trägervorrichtungen (22, 24) zwischen zwei im wesentlichen parallelen Gliedern (18, 20) befestigt sind und innere (22) und äußere Ringe (24) umfassen, die konzentrisch um eine Achse und im wesentlichen rechtwinklig zu den Gliedern angeordnet sind, und jeder Ring eine innere (30, 36) und eine äußere (28, 34) Wand enthält, die in Verbindung mit den beiden Gliedern einen ringförmigen Raum (32, 38) bestimmt, und die inneren (30, 36) und äußeren (28, 34) Wände eines jeden Rings abdichtend zwischen den zwei im wesentlichen parallelen Gliedern (18, 20) befestigt sind, um die ringförmigen Räume (32, 38) abzudichten, und eine der Lichtleiterspulen (48) auf dem äußeren Umfang der inneren Wand (30) und eines der Ringe angeordnet ist und die andere auf dem äußeren Umfang der außeren Wand (34) des anderen Rings, und Einrichtungen (40, 42, 44, 46) für die Kommunikation mit den ringförmigen Bereich, der zwischen den Ringen (22, 24) ausgebildet ist, und mit dem Bereich innerhalb des inneren Rings (22) bereitgestellt sind.

2. Hydrophon nach Anspruch 1 in Verbindung mit einer Lichtquelle (52) und einem Photodetektor (54), die optisch mit entgegengesetzten Enden der Lichtleiterspulen (48, 50) verbunden sind.

3. Hydrophon nach Anspruch 1 oder 2, in dem sich eine Anzahl Trägervorrichtungen befinden, wobei diejenigen Lichtleiterspulen davon, die so angeordnet sind, daß sie radial nach innen gerichteten Kräften ausgesetzt sind, in einer Reihenschaltung verbunden sind, und diejenigen Lichtleiterspulen davon, die so angeordnet sind, daß sie radial nach außen gerichteten Kräften ausgesetzt sind, in einer weiteren Reihenschaltung verbunden sind.

4. Hydrophon nach irgendeinem der vorhergehenden Ansprüche, umfassend zumindest eine Halterung (26) zum Befestigen eines der Glieder (20) mit Abstand zum anderen Glied (18).

5. Hydrophon nach irgendeinem der vorhergehenden Ansprüche, wobei eines der Glieder (20) kreisförmig ist.

6. Hydrophon nach irgendeinem der vorhergehenden Ansprüche, wobei beide Glieder (18, 20) im wesentlichen eben sind.

7. Hydrophon nach irgendeinem der vorhergehenden Ansprüche, wobei die Einrichtung zum Bereitstellen der Kommunikation Öffnungsvorrichtungen in mindestens einem der Glieder (18, 20) enthält.

8. Hydrophon nach irgendeinem der vorhergehenden Ansprüche, wobei die Ringe (22, 24) und die Glieder (18, 20) aus Aluminiumlegierung bestehen.

9. Hydrophon nach irgendeinem der vorhergehenden Ansprüche, wobei ein Zwischenabschnitt des Lichtleiters einer der Lichtleiterspulen von der äußeren Wand (34) des äußeren Rings (24) qetragen wird, und ein Zwischenabschnitt des Lichtleiters der anderen Lichtleiterspule von der inneren Wand (30) des inneren Rings (22) getragen wird.

10. Hydrophon nach irgendeinem der vorhergehenden Ansprüche 1 bis 8, wobei ein Zwischenabschnitt des Lichtleiters einer der Lichtleiterspulen von der inneren Wand (36) des äußeren Rings (24) getragen wird, und ein Zwischenabschnitt des Lichtleiters der anderen Lichtleiterspule von der äußeren Wand (28) des inneren Rings (22) getragen wird.

11. Hydrophon nach irgendeinem der vorhergehenden Ansprüche 1 bis 8, wobei Zwischenabschnitte des Lichtleiters einer der Lichtleiterspulen (48) von der äußeren Wand (34) des äußeren Rings (24) und der äußeren Wand (28) des inneren Rings (22) getragen werden, und Zwischenabschnitte des Lichtleiters der anderen Lichtleiterspule (50) von der inneren Wand (36) des äußeren Rings (24) und der inneren Wand (30) des inneren Rings (22) getragen werden.

12. Hydrophon nach irgendeinem der vorhergehenden Ansprüche, wobei das Hydrophon mit einem Elastomermaterial vergossen ist.

13. Hydrophon nach Anspruch 12, wobei das Elastomermaterial Polyurethan ist.

14. Hydrophon nach irgendeinem der Ansprüche 1 bis 11, wobei das Hydrophon so aufgebaut ist, daß es in einem Zustand verwendbar ist, in dem es in einem Fluid frei umströmt wird.

15. Hydrophon nach Anspruch 14, wobei das Fluid Wasser ist.

16. Hydrophon nach irgendeinem der vorhergehenden Ansprüche, so eingerichtet, daß es richtungsunabhängig arbeiten kann.

## Revendications

1. Hydrophone comportant des moyens (22, 24) de support de capteur et, montés sur les moyens (22,24) de support, des premier et second enroulements (48, 50) de fibre optique disposés coaxialement, les moyens de support (22, 24) étant fixés entre deux éléments (10, 20) sensiblement parallèles et comprenant des anneaux intérieur (22) et extérieur (24) disposés concentriquement autour d'un axe sensiblement à angle droit avec les deux éléments, chaque anneau comportant une paroi intérieure (30, 36) et une paroi extérieure (28, 34) définissant, en combinaison avec les deux éléments, un espace annulaire (32, 38), les parois intérieure (30, 36) et extérieure (28, 34) de chaque anneau étant fixées de façon étanche entre les deux éléments sensiblement parallèles (18, 20) pour fermer de façon étanche lesdits espaces annulaires (32, 38), l'un des enroulements (48) de fibre optique étant disposé sur la circonférence extérieure de la paroi intérieure (30) de l'un des anneaux et l'autre sur la circonférence extérieure de la paroi extérieure (34) de l'autre des anneaux, et des moyens (40, 42, 44, 46) étant destinés à établir une communication avec la zone annulaire formée entre lesdits anneaux (22, 24) avec la zone à l'intérieur de l'anneau intérieur (22).

2. Hydrophone selon la revendication 1, en combinaison avec une source (52) de lumière et un photodétecteur (54) en communication optique avec des extrémités opposées des enroulements (48, 50) de fibre.

3. Hydrophone selon la revendication 1 ou 2, dans lequel il y a plusieurs moyens de support, les enroulements de fibre de ceux qui sont disposés de façon à être soumis à des forces dirigées radialement vers l'intérieur étant connectés en série et les enroulements de fibre de ceux qui sont disposés de façon à être soumis à des forces dirigées radialement vers l'extérieur étant connectés en une autre série.

4. Hydrophone selon l'une quelconque des revendications précédentes, comportant au moins un organe de fixation (26) pour assujettir l'un des éléments (20) à l'autre élément (18), à distance de celui-ci.

5. Hydrophone selon l'une quelconque des revendications précédentes, dans lequel l'un des éléments (20) est de forme circulaire.

6. Hydrophone selon l'une quelconque des revendications précédentes, dans lequel les deux éléments (18, 20) sont sensiblement plans.

7. Hydrophone selon l'une quelconque des revendications précédentes, dans lequel les moyens établissant une communication comprennent des moyens à ouvertures dans au moins l'un des éléments (18, 20)

8. Hydrophone selon l'une quelconque des revendications précédentes, dans lequel lesdits anneaux (22, 24) et lesdits éléments (18, 20) sont en alliage d'aluminium.

9. Hydrophone selon l'une quelconque des revendications précédente, dans lequel une partie intermédiaire de la fibre optique de l'un des enroulements de fibre optique est portée par la paroi extérieure (34) de l'anneau extérieur (24) et une partie intermédiaire de la fibre optique de l'autre enroulement de fibre optique est portée par la paroi intérieure (30) dudit anneau intérieur (22).

10. Hydrophone selon l'une quelconque des revendications précédentes 1 à 8, dans lequel une partie intermédiaire de la fibre optique de l'un des enroulements de fibre optique est portée par la paroi intérieure (36) de l'anneau extérieur (24) et une partie intermédiaire de la fibre optique de l'autre enroulement de fibre optique est portée par la paroi extérieure (28) de l'anneau intérieur (22).

11. Hydrophone selon l'une quelconque des revendications précédentes 1 à 8, dans lequel des parties intermédiaires de la fibre optique de l'un des enroulements (48) de fibre optique sont portées par la paroi extérieure (34) de l'anneau extérieur (24) et par la paroi extérieure (28) de l'anneau intérieur (22) et des parties intermédiaires de la fibre optique de l'autre enroulement (50) de fibre optique sont portées par la paroi intérieure (36) de l'anneau extérieur (24) par la paroi intérieure (30) de l'anneau intérieur (22).

12. Hydrophone selon l'une quelconque des revendications précédentes, dans lequel ledit hydrophone est enrobé d'une matière élastomérique.

13. Hydrophone selon la revendication 12, dans lequel ladite matière élastomérique est un polyuréthanne.

14. Hydrophone selon l'une quelconque des revendications 1 à 11, dans lequel l'hydrophone est construit de façon à pouvoir être utilisé dans un état dans lequel il est immergé librement dans un fluide.

15. Hydrophone selon la revendication 14, dans lequel ledit fluide est de l'eau.

16. Hydrophone selon l'une quelconque des revendications précédentes, agencé pour fonctionner de façon omnidirectionnelle.
